# EUROPEAN PATENT APPLICATION

(11) **EP 3 944 757 A1**
(43) Date of publication of application: **02.02.2022**
(21) Application number: 21176303.2
(22) Date of filing: 27.05.2021
(51) Int. Cl.: A01G 24/60, G01N 33/24, G01N 1/38

(54) **A METHOD FOR PRODUCING GROWING MEDIA**

(30) Priority: 29.07.2020 PL 43484420
(71) Applicant: Sobex sp. z o.o., 66-530 Drezdenko (PL)
(72) Inventor: Sobota, Wladyslaw, 66-415 Klodawa (PL); Sobota, Rafal, 66-400 Gorzow Wielkopolski (PL); Zaprzalski, Przemyslaw, 61-446 Poznan (PL)
(74) Representative: AOMB Polska Sp. z.o.o.

(57) **Abstract**

A method of producing growing media, including the steps of:
- buffering raw materials in hoppers,
- composing the growing medium mixture,
- mixing,
- packaging,
characterized in that, after the mixing step, a soil solution is prepared for measuring pH and electrical conductivity using ultrasounds.

## Description

The subject of the invention is a method of producing growing media for both professional and unprofessional horticultural purposes that enables ongoing monitoring of physical and chemical parameters of the growing media at short intervals.

A typical process of producing growing media for professional and unprofessional horticultural purposes is accomplished in a process line that essentially follows the following processes: raw material buffering, compositing, mixing and packaging. The growing medium is a soil mixture and this terminology can be used interchangeably.

Industrial production of growing media is realized on a large scale of hundreds of cubic meters of growing media per hour, which requires the organization of appropriate production resources. Depending on the type of growing media manufactured, e.g. dedicated to lawns, conifers, flowers or universal applications, different amounts of growing media components and fertilizers are used, which constitute the formula of the mixture.

During the process of raw material buffering, the components constituting the largest volume share of growing media: compost, high peat, low-moor peat, coniferous bark, wood fibre, lightweight construction aggregate and sand, are fed by wheel loaders to the batching hoppers located over a common, connecting conveyor belt. Ingredients are supplied in a loose form with a fraction of 0-40 mm. Depending on the recipe provided for the growing medium manufactured at a given moment, an appropriate amount of components is dosed on a common conveyor belt and continuously transported to the mixer. The composition of growing media includes compost (from 10% to 40%), high peat (from 0% to 25%) and, in addition, other components including low-moor peat, coniferous bark, wood fiber, lightweight construction aggregate and sand in a total amount by weight (from 5% to 60%).

During transport by conveyor belt to the mixer, the temporary volume of the transported growing media is determined, after which additives including fertilizers, adjuvants and other refining ingredients are added to the growing medium in the volume proportions provided in the recipe.

The medium composed in this way, not yet mixed, is then fed with a conveyor belt to a mixer where all the components are mixed evenly and continuously and then the ready medium mixture is transported to the packaging line.

The packaging line is used for bagging, labelling, stacking and securing growing media on pallets for transport. Finished pallets are moved by forklifts within the warehouse area for storage and loading.

Key parameters that characterize manufactured media include bulk density, pH and electrical conductivity (EC) of the soil solution .

The following table summarizes the expected parameter values for sample growing media:

| Parameters | Growing medium | | | |
|---|---|---|---|---|
| | Universal | Lawns | Conifers | Balkony plants |
| pH | 5.5-6.5 | 5.8-6.8 | 5-6 | 5.5-6.5 |
| Electrical conductivity [mS cm⁻¹] | <0.882 mS cm⁻¹ | <1.176mS cm⁻¹ | <1.176mS cm⁻¹ | <1.176mS cm⁻¹ |
| Bulk density [g dm⁻³] | 432 | 453 | 449 | 449 |

The production process can be performed with an exemplary capacity of 200 m³ of growing medium per hour and yet, the standardized methods for measuring pH value and electrical conductivity of the soil solution, contained in the PN-ISO 10390:1997 and PN-EN 27888:1999 standards, require at least 2 hours of mixing and stabilization of the soil solution before measuring pH and electrical conductivity. According to this method, soil (medium) is mixed with water at a volume ratio of 1:5 for a period of 2 to 24 hours and then stabilized immediately before measurement.

This means that the possible appearance of an error in the admixture of growing medium components can be detected at the earliest after 2 hours, so in the case described, this means a loss of at least 400 m³ of the medium that will not show the assumed physio-chemical parameters.

Therefore, a method is being sought that can significantly reduce the time to perform measurements of the pH value and electrical conductivity of the soil solution of the growing medium.

There is known a modified method of pH and electrical conductivity measurements of soil solution developed by Instytut Ogrodnictwa in Skierniewice, in which soil is mixed with water in volume ratio 1:2 and stirred for at least 30 minutes and then stabilized before the measurement. The use of smaller amount of water in comparison to methods of soil solution preparation according to PN-ISO 10390:1997 and PN-EN 27888:1999 causes faster registration of pH at the level corresponding to the standard measurement. The improved method allows to obtain the measurement result of pH and electrical conductivity of the soil solution after a minimum period of 1 hour, which still means the risk of incurring production losses at the level of one-hour production, i.e. in the described example about 200 m³ of garden soil.

A method is therefore still being sought to reduce the time taken to measure the pH value and electrical conductivity of the soil solution for produced growing media.

Unexpectedly, it was found that treating the soil solution with ultrasound while stirring the solution in its volume reduces the time to prepare the soil solution for electrical conductivity measurement to about 5 seconds, and the time to prepare the soil solution for pH measurement to 15 seconds. This allows for the realization of frequent measurements of pH and electrical conductivity of the soil solution even with a frequency of 1 minute after taking into account the automation of sample collection and transfer for analysis. In this way, an ongoing analysis of the physical and chemical parameters of the growing media produced becomes possible and production losses are minimized. The potential production loss due to random events in the production line can be estimated as 1 minute of loss of control of the parameters of mixtures or the time elapsed from the detection of a deviation to the time of correction of the feeding of ingredients and their passage on the conveyor from the stage of composition to the stage of mixing, i.e. 1 to 2 minutes. In the example given, this means approximately 30 to 60-fold reduction in losses. In addition, losses can be eliminated completely by taking advantage of frequent observation of the trend of changes in physical and chemical parameters and prediction of the occurrence of deviations, which is not possible when obtaining measurement information in 1 or 2 hour intervals.

The subject of the invention is a method of producing growing media, including the steps of:
- buffering raw materials in hoppers,
- composing the growing medium mixture,
- mixing,
- packaging,
characterized in that the mixing step is followed by a step of preparing a sample of the soil solution for measuring pH and electrical conductivity, wherein the growing medium is mixed with distilled water in a ratio of 1:1, and then the soil solution so prepared is treated with ultrasound by means of a sonotrode (105) vibrating at a frequency of 20kHz to 40kHz, advantageously 20kHz.

Preferably, the cross section of the sonotrode (105) is from 1 cm² to 6 cm², advantageously 3.8 cm², and the vibration amplitude is from 15 to 80 micrometers, advantageously 28 micrometers.

Preferably, the electrical conductivity of the soil solution is measured after a time interval of 2 to 7 seconds, advantageously 5 seconds, in a sample of the solution extracted from the soil solution via a sieve.

Preferably, the pH value of the soil solution is measured after a time interval of 10 to 20 seconds, advantageously 15 seconds, in a sample of the solution extracted from the soil solution via a sieve.

Preferably, the sonotrode is placed in the wall of the vessel used to prepare the soil solution 101 at half the height of the soil solution.

The invention will now be discussed using an embodiment with reference to a drawing on which the various figures show:

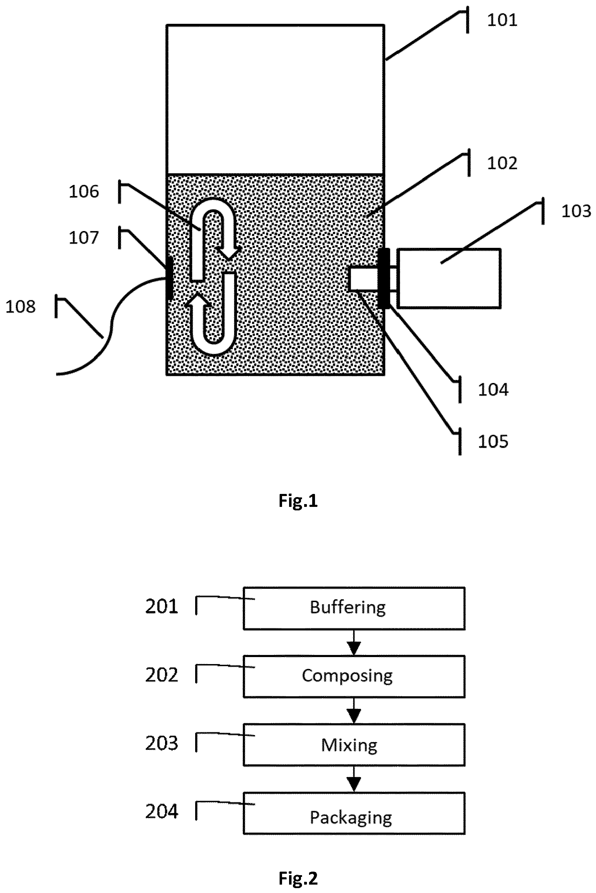

Fig. 1 - Scheme of a vessel for preparing soil solution with ultrasound and mechanical agitation of the solution,
Fig. 2 Successive processes in the production of the growing media,
Fig. 3 -Variation of pH value of soil solution in a soil solution preparation vessel with ultrasound and mechanical agitation as a function of time of ultrasound action on soil solution,
Fig. 4 - Variation of the electrical conductivity value of soil solution in a soil solution preparation vessel with ultrasound and mechanical agitation as a function of the time of ultrasound action on the soil solution.

In the method according to the invention, the soil solution (102) is prepared by combining the growing medium with water in a volume ratio of 1:1 followed by ultrasonic treatment with a sonotrode.

The prepared solution is treated simultaneously with ultrasound and mechanical agitation (106) of the solution (102). After a time period of 2 to 7 seconds, advantageously 5 seconds, a water sample is extracted from the solution (102) via a sieve (107) and a tube (108) and electrical conductivity is tested therein using a standard probe. The ultrasonic and agitation action (106) continues and then, after a period of 10 to 20 seconds, advantageously 15 seconds, a water sample is extracted from the solution (102) via the sieve (107) and tube (108) and the pH value is tested therein using a standard probe. The mesh is selected so as to filter out particulate matter larger than 0.5 mm, preferably 0.1 mm.

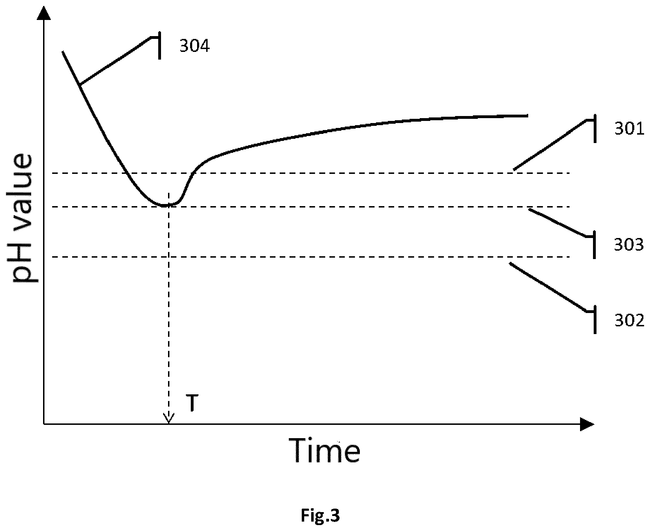

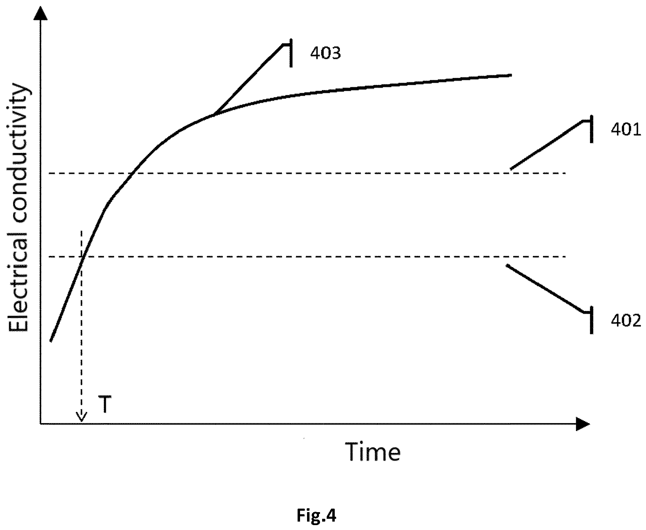

The action of ultrasound on the soil solution results in accelerated dissolution of the minerals responsible for the pH and electrical conductivity of the soil solution leading to the observed decrease in pH and increase in conductivity. The pH value decreases initially from pH = 7 of freshly added distilled water due to the release of hydrogen ions into the solution. At the same time, the electrical conductivity of the solution increases. Cavitation also leads to breaking the cells of the organic part of the soil and releases the cell plasma into the volume of the solution, which could be easily observed when successive portions of the soil solution were seeped, becoming sticky and viscous as the exposure to ultrasound was prolonged. This process in turn leads to an increase in the pH in the solution and the resultant effect of both opposing tendencies observed during exposure of the solution to ultrasound is illustrated in Fig.3. The pH value decreases from an initial value of about 7 (line 304) to a pH value close to the pH value determined by the normalized method (303). This value is within the range of acceptable values for the produced growing medium from a value of 302 to 301. The pH value closest to the value read by the standardized method is reached in the ultrasound treated solution (102) after a time T of about 15 seconds after which it increases due to the release of cell plasma into the solution. The electrical conductivity value 403 illustrated by Fig.4 increases as the exposure to the ultrasound is prolonged, with the conductivity value being most similar to the value 402 measured by the standardized method after a time T of about 5 seconds, and after the continuation of the ultrasound, the conductivity value exceeds the value 401 defined as the limit for the manufactured growing media. This is due to the increasing release of cell plasma into solution and increasing total content of both cations and anions in solution affecting electrical conductivity.

Thanks to the method according to the invention, the lead time for the measurement of pH and electrical conductivity of soil solutions has been reduced, which is a necessary action to enable proper management of the line producing growing media. At the same time, thanks to the method according to the invention, the risk of incurring losses in the production of growing media has been reduced and it has been made possible to eliminate this risk altogether by observing trends and predicting changes in the values of pH and electrical conductivity of the produced growing media.

### Example 1

To produce a growing medium dedicated to balcony plants, the process began by buffering the ingredients in hoppers containing compost, high peat, low-moor peat, construction aggregate and sand. The ingredients were prepared in loose form with a fraction of 0-40 mm. The following volumetric quantities of ingredients were fed to the common conveyor belt: compost 40%, high peat 20%, low-moor peat 30%, construction aggregate 5% and sand 5%. To the mixture prepared in this way, 0.1% by volume of nitrogen fertilizer was added on the conveyor belt, after which the whole was directed by the conveyor belt to the mixer. The mixture thus obtained was fed to a conveyor sending it to the packaging line, and during the transfer from the conveyor, medium samples were periodically taken from the conveyor in the amount of 5 liters every 1 minute into a vessel (101) made of PVC with a diameter of 200mm. Five liters of distilled water were added to the vessel with the collected soil sample after which an ultrasonic sonotrode with a circular cross section and a sonotrode surface area of 3.8 cm² was activated, generating vibrations with a frequency of 20kHz and an amplitude of 28 micrometers, while mechanically stirring the soil solution (102). After 5 seconds, a portion of 50 ml of the solution was aspirated from the vessel (101) via the tube (108) and sieve (107) and the electrical conductivity value was measured, which was 0.887 mS cm⁻¹ which corresponded to the values measured by the standardized method with an accuracy of +/- 40 mS cm⁻¹. After 15 seconds, a portion of 50 ml of the solution was aspirated from vessel (101) through tube (108) and sieve (107) and the pH value was measured, which was 6.41, which corresponded to the values measured by the standardized method with an accuracy of +/- 0.02. Medium sampling and measurement was performed periodically every 1 minute, thus allowing observation of the variability of physico-chemical parameters of the produced growing media.

## Claims

1. A method of producing growing media, including the steps of:
- buffering raw materials in hoppers,
- composing the growing medium mixture,
- mixing,
- packaging,
**characterized in that** the mixing step is followed by the step of preparing a sample of the soil solution for measuring pH and electrical conductivity, wherein the growing medium is mixed with distilled water in a ratio of 1:1, and then the soil solution so prepared is treated with ultrasound using a sonotrode (105) vibrating at a frequency of 20kHz to 40kHz, preferably 20kHz.

2. The method according to claim 1, **characterized in that** the cross section of the sonotrode (105) is from 1 cm² to 6 cm², preferably 3.8 cm², and the vibration amplitude is from 15 to 80 micrometers, preferably 28 micrometers.

3. The method according to claim 1 or 2, **characterized in that** the electrical conductivity of the soil solution is measured after a time interval of 2 to 7 seconds, preferably 5 seconds, in a sample of the solution extracted from the soil solution via a sieve.

4. The method according to claim 1 or 2 or 3, **characterized in that** the pH value of the soil solution of the growing medium is measured after a time interval of 10 to 20 seconds, preferably 15 seconds, in a sample of the solution extracted from the soil solution via a sieve.

5. The method according to any of the preceding patent claims, **characterized in that** the sonotrode is placed in the wall of the vessel for preparing the soil solution (101) at half the height of the soil solution.
